# EUROPÄISCHE PATENTSCHRIFT

(11) **EP 0 695 666 B1**
(45) Veröffentlichungstag und Bekanntmachung des Hinweises auf die Patenterteilung: **10.06.1998**
(21) Anmeldenummer: 95111630.0
(22) Anmeldetag: 24.07.1995
(51) Int. Cl.: B60M 1/26

(54) **Nachspanneinrichtung**
Retensioning device
Dispositif d'ajustement de tension

(30) Priorität: 04.08.1994 DE 4427684
(43) Veröffentlichungstag der Anmeldung: 07.02.1996
(73) Patentinhaber: SIEMENS AKTIENGESELLSCHAFT, 80333 München (DE)
(72) Erfinder: Kiessling, Friedrich, Dr., D-91083 Baiersdorf (DE); Biege, Ulrich, D-90439 Nürnberg (DE); Ungvári, Stefan, Dipl.-Ing., D-91356 Kirchehrenbach (DE)

(56) Entgegenhaltungen:
- DE-B- 2 630 672
- GB-A- 2 207 403

## Beschreibung

Die Erfindung betrifft eine Nachspanneinrichtung für Fahrdrähte und Drahtseile einer Oberleitungsanlage in einem Tunnel, bei der die Fahrdrähte und/oder Tragseile an drehbar gelagerten Radspannern angeschlossen sind und bei der über wenigstens ein Gewicht jeweils eine konstante Spannkraft im Fahrdraht und/oder im Tragseil vorgebbar ist.

In Oberleitungsanlagen werden die Spannkräfte in den Fahrdrähten und in den Tragseilen durch Gewichte auf einen vorgebbaren Wert konstant gehalten. Gleichzeitig werden durch die vertikalen Bewegungen der Gewichte die temperaturbedingten Längenänderungen der Fahrdrähte und Drahtseile in einem definierten Temperaturbereich kompensiert.

Bei den bekannten Nachspanneinrichtungen sind die Gewichte als Gewichtssäulen ausgebildet, die jeweils am Radspanner beweglich befestigt sind. Derartige Nachspanneinrichtungen benötigen relativ viel Raum und sind deshalb für Oberleitungsanlagen in einem Tunnel nur eingeschränkt geeignet.

Aufgabe der vorliegenden Erfindung ist es, eine Nachspanneinrichtung zu schaffen, die nur einen geringen Raumbedarf im Tunnel erfordert.

Die Aufgabe wird erfindungsgemäß durch die Merkmale im kennzeichnenden Teil des Anspruchs 1 gelöst. Vorteilhafte Ausgestaltungen der Erfindung sind in den weiteren Ansprüchen beschrieben.

Bei der erfindungsgemäßen Nachspanneinrichtung ist das Gewicht an der Tunnelinnenwand entlanggeführt. Unabhängig von der Art des Tunnels benötigt die Nachspanneinrichtung gemäß Anspruch 1 damit nur einen geringen Raumbedarf.

Ein besonders geringer Raumbedarf im Tunnel durch eine besonders gute Anpassung an die Kontur der Tunnelinnenwand wird bei einer Nachspanneinrichtung gemäß Anspruch 6 erreicht.

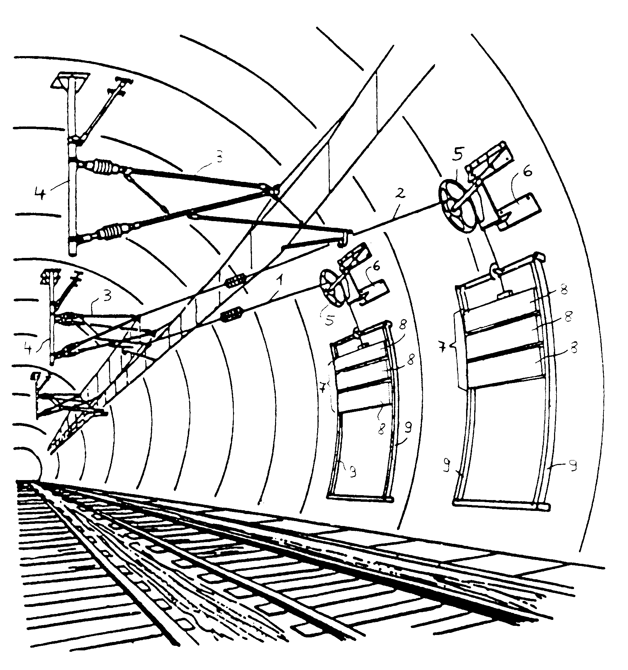

Weitere Vorteile und Einzelheiten der Erfindung ergeben sich aus der nachfolgenden Beschreibung eines in der Zeichnung dargestellten Ausführungsbeispiels.

Ein aus einem Fahrdraht 1 und einem Tragseil 2 bestehendes Kettenwerk ist über Oberleitungstragwerke 3 und Hängesäulen 4 auf an sich bekannte Weise an einer Decke eines Tunnels befestigt.

Der Fahrdraht 1 und das Tragseil 2 sind an jeweils an einen Radspanner 5 angeschlossen. Der Radspanner 5 ist im gezeigten Ausführungsbeispiel in einer Halterung 6, die an der Tunnelinnenwand befestigt ist, drehbar gelagert.

An den Radspannern 5 sind weiterhin Gewichte 7 befestigt, durch die eine konstante Spannkraft im Fahrdraht 1 und im Tragseil vorgebbar ist und durch die temperaturbedingte Längenänderungen des Fahrdrahtes 1 und des Tragseils 2 ausgleichbar sind.

Erfindungsgemäß sind die Gewichte 7 an der Tunnelinnenwand entlanggeführt. Die Gewichte 7 sind in vorteilhafter Weise als Gewichtssatz in Kulissenbauweise ausgebildet. Der Gewichtssatz 7 besteht im vorliegenden Ausführungsbeispiel aus jeweils drei Gewichtskörpern 8, die wie die Glieder einer Fahrradkette miteinander gelenkig verbunden sind.

Die Gewichtskörper 8 sind beidseitig in Führungsschienen 9 geführt, die der Kontur des Tunnelgewölbes angepaßt sind. Zur Führung der Gewichtssätze 7 in den Führungsschienen 9 sind an beiden Stirnseiten der Gewichtskörper 8 Lagerbolzen angeordnet, die mit ihren freien Enden in den Nuten der Führungsschienen 9 geführt sind.

Die erfindungsgemäße Nachspanneinrichtung ist nicht nur für die Montage in einem Rundtunnel geeignet. Sie läßt sich ebensogut in einem Tunnel mit senkrecht oder geneigt verlaufenden und/oder ebenen Wänden montieren.

Bei der erfindungsgemäßen Nachspanneinrichtung wird damit unabhängig von der Art des Tunnels der Raumbedarf für die Nachspanneinrichtung reduziert.

## Patentansprüche

1. Nachspanneinrichtung für Fahrdrähte (1) und Tragseile (2) einer Oberleitungsanlage in einem Tunnel, bei der die Fahrdrähte (1) und/oder die Tragseile (2) an drehbar gelagerten Radspannern (5) angeschlossen sind und bei der über wenigstens ein Gewicht (7) jeweils eine konstante Spannkraft im Fahrdraht (1) und/oder im Tragseil (2) vorgebbar ist,
**dadurch gekennzeichnet,**
daß das Gewicht (7) an der Tunnelinnenwand entlanggeführt ist.

2. Nachspanneinrichtung nach Anspruch 1,
**dadurch gekennzeichnet,**
daß das Gewicht (7) als Gewichtssatz ausgebildet ist, der wenigstens zwei Gewichtskörper (8) umfaßt, die miteinander gelenkig verbunden sind.

3. Nachspanneinrichtung nach Anspruch 2,
**dadurch gekennzeichnet,**
daß die Gewichtskörper (8) rechteckig ausgebildet sind.

4. Nachspanneinrichtung nach Anspruch 3,
**dadurch gekennzeichnet,**
daß die Gewichtskörper (8) beidseitig in Führungsschienen (9) geführt sind.

5. Nachspanneinrichtung nach Anspruch 4,
**dadurch gekennzeichnet,**
daß die Gewichtskörper (8) an ihren beiden Stirnseiten Lagerbolzen aufweisen, die mit ihren freien Enden in Nuten der Führungsschienen (9) geführt sind.

6. Nachspanneinrichtung nach Anspruch 4,
**dadurch gekennzeichnet,**
daß die Krummung der Führungsschienen (9) der Kontur des Tunnelgewölbes angepaßt ist.

7. Nachspanneinrichtung nach einem der Ansprüche 1 bis 6,
**dadurch gekennzeichnet,**
daß die Halterung (6), in der der Radspanner (5) drehbar gelagert ist, an der Tunnelinnenwand und/oder an der Tunneldecke befestigt ist.

## Claims

1. Retensioning device for contact wires (1) and bearer wires (2) of an overhead line installation in a tunnel, in which device the contact wires (1) and/or the bearer wires (2) are connected to rotatably mounted wheel tensioners (5), and in which device, by way of at least one weight, a constant tension can be pre-set in the contact wire (1) and/or in the bearer wire (2) in each case, characterised in that the weight (7) is guided along the inside wall of the tunnel.

2. Retensioning device according to claim 1, characterised in that the weight (7) is constructed as a set of weights, which comprises at least two weight bodies (8) which are joined together in an articulated manner.

3. Retensioning device according to claim 2, characterised in that the weight bodies (8) are rectangular in construction.

4. Retensioning device according to claim 3, characterised in that the weight bodies (8) are guided on both sides in guide rails (9).

5. Retensioning device according to claim 4, characterised in that the weight bodies (8) have at each of their end faces bearing pins, the free ends of which are guided in grooves of the guide rails (9).

6. Retensioning device according to claim 4, characterised in that the curvature of the guide rails (9) is matched to the contour of the tunnel arch.

7. Retensioning device according to one of claims 1 to 6, characterised in that the holding device (6) in which the wheel tensioner (5) is rotatably mounted is fastened to the inside wall of the tunnel and/or to the tunnel ceiling.

## Revendications

1. Dispositif tendeur pour des fils (1) de contact et des câbles (2) porteur d'une installation caténaire dans un tunnel, dans lequel les fils (1) de contact et/ou les câbles (2) porteur sont raccordés à des tendeurs (5) à roue montés tournant et dans lequel une force de tension constante dans le fil (1) de contact et/ou dans le câble (2) porteur peut être prescrite par l'intermédiaire d'au moins un poids (7), caractérisé en ce que le poids (7) est guidé le long de la paroi intérieure du tunnel.

2. Dispositif tendeur suivant la revendication 1, caractérisé en ce que le poids (7) est réalisé en série de poids qui comprend au moins deux éléments (8) de poids qui sont articulés l'un à l'autre.

3. Dispositif tendeur suivant la revendication 2, caractérisé en ce que les éléments (8) de poids sont réalisés de manière rectangulaire.

4. Dispositif tendeur suivant la revendication 3, caractérisé en ce que les éléments (8) de poids sont guidés de part et d'autres dans des rails (9) de guidage.

5. Dispositif tendeur suivant la revendication 4, caractérisé en ce que les éléments (8) de poids comportent à leurs deux extrémités frontales des tourillons qui sont guidés par leurs extrémités libres dans des rainures des rails (9) de guidage.

6. Dispositif tendeur suivant la revendication 4, caractérisé en ce que l'incurvation des rails (9) de guidage est adaptée au contour du cintrage du tunnel.

7. Dispositif tendeur suivant l'une des revendications 1 à 6, caractérisé en ce que la fixation (6), dans laquelle le tendeur (5) à roue est monté tournant, est fixée à la paroi intérieure du tunnel et/ou au plafond du tunnel.
